# EUROPEAN PATENT SPECIFICATION

(11) **EP 4 561 489 B1**
(45) Date of publication and mention of the grant of the patent: **02.09.2026**
(21) Application number: 23749056.0
(22) Date of filing: 28.07.2023
(51) Int. Cl.: A61C 1/00, A61C 3/025, A61C 1/08, B24C 7/00, G05D 16/10

(54) **SYSTEM FOR PRODUCING A POWDER-GAS JET FOR PERFORMING A DENTAL TREATMENT**
SYSTEM ZUR HERSTELLUNG EINES PULVERGASSTRAHLS ZUR DURCHFÜHRUNG EINER ZAHNÄRZTLICHEN BEHANDLUNG
SYSTÈME DE PRODUCTION D'UN JET DE GAZ EN POUDRE POUR EFFECTUER UN TRAITEMENT DENTAIRE

(30) Priority: 29.07.2022 EP 22187873
(43) Date of publication of application: 04.06.2025
(73) Proprietor: Ferton Holding S.A., 2800 Delémont (CH)
(72) Inventor: BEANI, Florent, 01170 Gex (FR)
(74) Representative: Müller Schupfner & Partner Patent- und Rechtsanwaltspartnerschaft mbB (Muc)
(86) International application number: PCT/EP2023/071065
(87) International publication number: WO 2024/023333

(56) References cited:
- FR-E- 62 257
- JP-A- 2008 065 727
- JP-A- 2020 191 939
- US-A- 2 488 647
- US-A- 2 600 137
- US-A1- 2004 007 269
- US-A1- 2004 202 980
- US-A1- 2005 019 724
- US-A1- 2018 355 998

## Description

The present invention deals with a system for producing a powder-gas jet for performing a dental treatment.

Powder gas jet devices are well-known in the technical field of dental treatments. These powder gas jet devices are intended to provide a powder gas mixture, being ejected via a nozzle element, for air polishing of teeth. Especially, the powder being used in the powder gas mixture includes abrasive material, being intended to remove biofilm, plaque or other materials and/or colorations from a surface of teeth. The powder gas mixture is thereby generated by the powder gas jet device by swirling pressurized gas and powder inside a powder gas mixing chamber. For example, the powder gas mixing chamber is realized as a powder chamber storing powder while the pressurized gas enters the powder chamber for creating the powder gas mixture inside the powder gas mixing chamber. The powder gas mixture exits the powder chamber and is provided to the nozzle element.

Preferably, the powder gas jet devices include a handpiece, having a powder gas mixing chamber and/or powder chamber. The handpiece can be orientated and placed by an operator to direct the nozzle element such that the ejected powder gas mixture streams onto the surface of the teeth. The handpiece is supplied by pressurized gas via a supply line, being connected to a gas source.

Preferably, the gas pressure source is part of a dentist chair providing pressurized gas also to a plurality of other dental instruments. For example, the gas pressure source is incorporated into a chair system, which is used for placing the patient, as well as for providing all necessary instruments to the operator. This system also includes supply lines, providing electrical energy and/or materials such as fluids, for example water or gas.

However, those systems usually provide a pressurized gas at the gas source, the pressure level of the pressurized gas being significantly larger than the pressure level being needed for the powder gas jet device. As a result, the operator needs to adapt the pressure level at the gas pressure source such that it can be used for the powder gas jet device. This results in a loss of time and creates additional effort for the operator.

Alternatively, the prior art also knows flow regulation devices, which can adapt the flow rate at their outlet. However, if the powder gas jet device, especially the nozzle element is partially or fully obturated or blocked, for example when the nozzle element is in contact with gum, the flow regulation devices will become inefficient and the pressure inside the powder gas mixing chamber will rise. In this case a risk of emphysema increases. Further, the device of the prior art suffers pressure variations as the gas source is subject to variations.

Examples for Powder jet devices can be found in JP 2020 191 939 A, FR 62 257 E, US 2004/202980 A, US 2005 019724 A1. In particular, JP2020 191 939 shows a powder spraying apparatus for use with dental medical treatment apparatus, with a handpiece provided with a pressure adjusting mechanism upstream its powder accommodating portion. FR 62 257 E or US 2004/202980 A both show a dental system for producing powder-gas jet with a compressed gas circuit including a pressure regulation device, said gas circuit being then connected to a handpiece.

US 2 600 137 A, JP 2008 065 727 A US 2 488 647 A, US 2004 007 269 A1 and US 2018 355 998 A1 describe pressure regulation devices.

Considering the prior art, it was an object of the present invention to provide a way of simplifying the attachment of the powder gas jet device or a handpiece to a gas source, especially in a dental treatment system, without using a flow regulation device as it is known from the prior art. It was also an object of the present invention to provide a device that delivers a constant pressure and that is not subject to pressure variations of the pressurized gas flow feeding the system

This object is achieved by the system with a powder gas jet device according to claim 1. Preferred embodiments are incorporated in the dependent claims, the description and the figures.

According to the present invention a system for producing a powder-gas jet for performing a dental treatment is provided, wherein the system is configured for being connected to a dentist chair by a connection, wherein the connection of the system to the dentist chair allows the system to be fed by a pressurized gas flow, the system comprising a compressed gas circuit configured to direct the pressurized gas flow into a powder-gas-mixing chamber to form a gas-powder mixture, wherein the compressed gas circuit comprises at least a pressure regulation device having an inlet and an outlet, the regulation device being configured to provide the pressurized gas flow with a pressure at its outlet that is independent of the pressure of the gas flow at its inlet, when it is fed by the pressurized gas flow,
wherein the pressure regulation device comprises
   - a basic body and
   - a valve element, which can be moved relative to the basic body between an open position and a closed position, wherein the valve element separates an inlet section of the pressure regulation device from an outlet section of the pressure regulation device, when the valve element is in the closed position, and wherein a fluid can be transferred from the inlet section to the outlet section, when the valve element is in the open position and
wherein the system includes a handpiece and the pressure regulation device is incorporated into the handpiece.

Preferably the pressure regulator a pressure reducing regulator, which is configured to provide the pressurized gas flow with a pressure at its outlet that is independent of the pressure of the gas flow at its inlet, when it is fed by the pressurized gas flow. In particular, the regulation device includes a valve.

Contrary to the prior art, the present invention suggests to use the pressure regulation device as part of the system for producing a powder-gas jet for performing a dental treatment. The regulation device is located upstream to a powder-gas-mixing chamber. As a result, independent of the size of the pressure level at a gas source, the pressure level at the outlet of the pressure regulation device is mainly constant and independent of the pressure level at the inlet of the pressure regulation device and therefore independent of the size of the pressure level of the output of the gas source. The term "independent means" that the pressure at the outlet has a constant value, when the pressure at the inlet section exceeds a threshold. The pressure regulator is preferably chosen such that the threshold is adapted to the pressurized gas being provided to the system, in particular by the pressurized gas being provided to the system.

As it is well known for the skilled person a pressure reducing regulator's primary function is to match the flow of gas through the regulator to the demand for fluid placed upon it, whilst maintaining a sufficiently constant output pressure in the output section. If the load flow decreases, then the regulator flow must decrease as well. If the load flow increases, then the regulator flow must increase in order to keep the controlled pressure from decreasing due to a shortage of fluid in the pressure system. It is desirable that the controlled pressure does not vary greatly from the set point for a wide range of flow rates, but it is also desirable that flow through the regulator is stable and the regulated pressure is not subject to excessive oscillation.

A pressure regulator includes preferably a restricting element, a loading element, and a measuring element. The restricting element is a valve that can provide a variable restriction to the flow, such as a globe valve, butterfly valve and/or poppet valve. The loading element is a part that can apply the needed force to the restricting element. This loading can be provided by a weight, a spring, a piston actuator, or the diaphragm actuator in combination with a spring. The measuring element functions to determine when the inlet flow is equal to the outlet flow. The diaphragm itself is often used as a measuring element; it can serve as a combined element. It is obvious for the skilled person that there is a plurality of possible valve systems available to realize the effect of the pressure regulator. The pressure regulator is preferably chosen such that the pressure regulator is suitable to handle the pressure level of the pressure source in the dentist chair.

The pressure of the gas flow at the outlet of the pressure regulation device is independent from any variation of pressure of the gas flow at the inlet. This independency of the size of the pressure level at the gas pressure source allows a simplified attachment of the system for producing a powder gas jet to the gas source, since it avoids a complicated adjustment of the output level of the pressurized gas at the gas source. Instead, the operator just attaches the system with the handpiece via a supply line, to the gas source, especially to a certain terminal of the gas source, and the pressure level at the outlet of the pressure regulation device is automatically set for providing pressurized gas at a determined level to the powder-gas-mixing chamber. It is well-known by the skilled person that a pressure regulation device provides a constant pressure at its outlet when the pressure at its inlet exceeds a threshold value.

The pressure regulation device is independent of the pressure level at the gas source. "Independent of the pressure level at gas source" preferably means that the pressure regulation device does not set the pressure level at the gas source, and especially cannot be used together with another treatment device, which is also intended to be used together with the gas source. The pressure regulation device is only assigned to the system to provided a powder gas jet. The pressure regulation device is assigned and preferably individualized to the powder gas jet device.

Especially, it is provided that the gas pressure source is part of a dental treatment system, the dental treatment system being configured for handling also a plurality of different handpieces and/or dental instruments, which can be attached to the system, especially having several dental treatment devices which make use of pressurized gas of the gas source. In other words: The gas pressure source is configured to supply gas or pressurized gas for a plurality of different devices, each device of the plurality of different devices having a different requirement concerning the pressure level at its input.

Additionally the system includes a powder gas jet device for performing a dental treatment by ejecting a powder-gas mixture is provided, comprising
- a powder-gas-mixing chamber, wherein the pressure regulation device having an inlet and an outlet is arranged upstream to the powder-gas-mixing chamber, wherein the outlet is connected to the powder-gas mixing chamber and
wherein the pressure regulation device determines the pressure level at its outlet independent of a pressure level at its input.

According to the present invention, the system includes a handpiece. According to the invention the pressure regulation device is incorporated in the handpiece. In particular, the system comprises a supply line,. Preferably, it is provided that the system comprises a supply line, preferably for forming at least a part of the compressed gas circuit, transporting the pressurized gas from the gas pressure source to the powder-gas-mixing chamber, . In particular, it is of benefit to arrange the pressure regulation device close to the handpiece such that the operator can act on the pressure regulation device, for example for a fine tuning or adjustment.

In particular, the system comprises a handpiece comprising a nozzle for ejecting the powder-gas mixture, the handpiece being configured for being connected to the dentist chair through a supply line designed for supplying at least a gas flow to the handpiece. Furthermore, the dentist chair includes a gas source for providing pressurized gas to create the powder gas mixture in the powder-gas-mixing chamber. The gas pressure source does not need to be individualized or adapted for the powder gas jet device, being attached. As a consequence, a simplified exchange of the handpiece and/or the powder gas jet device can be established, especially without any adaptation of the pressure level at the adjustment means of the gas source.

Furthermore, using a pressure regulation device avoids the use of a flow regulation device as it is known from the prior art. Those flow regulation devices adapt the flow rate of the transported gas powder mixture for example by setting the size of the cross-section transport channel. A flow regulation device or flow restrictor is an element (for example.: smaller orifice, tap...), which creates a pressure drop at a given flow through it, i .e. the higher the flow, the higher the pressure drop. If the flow tends to zero (for example, due to an obstructed outlet), the pressure drop tends to zero. In the case of a fully obstructed outlet, the outlet pressure will equal inlet pressure. The flow will also vary depending of the difference between the inlet and outlet pressure, causing variation in performance if the inlet pressure varies.

Such flow regulation devices especially create problems in case of a situation, in which the handpiece, especially the nozzle element, is partially or fully obturated, for example when the nozzle element is in contact with gum of a patient. In these cases, the flow regulation device will become inefficient and the pressure inside the powder-gas-mixing chamber will rise. In this case, the risk of an emphysema is increased. Considering this, avoiding the flow regulation device, especially by using the pressure regulation device, also has benefits with respect to decreasing the risk of an emphysema during operation. Preferably, it is provided that the powder gas jet device and/or the system having the powder gas jet device is free of a flow regulation device.

It is also conceivable that system is formed by the powder gas jet device, in particular by the handpiece of the powder jet gas device.

By incorporating the pressure regulation device into the handpiece a compact configuration of the pressure regulation device is preferred. In case of incorporating the pressure regulation device into the supply line, which is not the embodiment of the invention, the pressure regulation device provides an easy access for the operator to the pressure regulation device, for example for maintenance or for adjusting the pressure level at the outlet.

Furthermore, it is provided that the gas pressure source is configured to provide pressurized gas at a pressure level being larger than the required pressure level of the powder gas jet device. Especially, the gas pressure source is intended to supply several different instruments with a pressurized gas, such that a high pressure level guarantees that all instruments have gas of a sufficient pressure level. In this case it is of advantage to have a pressure regulation device, since it is guaranteed that the pressure level of the gas pressure source exceeds a threshold. Above the threshold the pressure level at the outlet of the pressure regulation device is constant, especially independent of the size of the pressure level at the input side of the regulation device. Preferably, the pressurized gas being provided by the gas pressure source at the terminal is at least two times, more preferably more than three times and most preferably more than four times larger than the required pressure level of the powder gas jet device. The required pressure level of the powder gas jet device creates the desired powder gas mixture inside the powder-gas-mixing chamber.

In particular, the pressure regulation device is configured to adapt a ratio between the pressure at the inlet and the pressure at the outlet. This advantageously allows to adapt the size of the output pressure, if necessary. Preferably, it is provided that the regulation device is configured to adapt the pressure level at its outlet, preferably by an adjustment element. For example, the pressure regulation device comprises a ring element which can be turned or rotated for adjusting the pressure level at the outlet of the pressure regulation device. Such an adjustment element can be used for a fine-tuning of the pressure level at the outlet of the pressure regulation device. For example, the adjustment device is directly arranged at the handpiece, such that the operator can just perform the adjustments directly at the handpiece. The adjustment element is not intended to decrease the pressure level of the gas pressure source to the required pressure level of the powder gas jet device. The potential change concerning the pressure level is at least 5 times smaller than the difference between the pressure at the inlet and the pressure at the outlet of the pressure regulation device.

Preferably, it is provided that the pressure regulation device is formed as an adapter, being plugged into the powder gas jet device between the gas pressure source and the handpiece. As a result, it is advantageously possible to upgrade powder gas jet devices or systems having no regulation device, yet. Especially, by selecting the interfaces of the pressure regulation devices to the interface between the handpiece and the supply line, the pressure regulation device, being formed as an adapter, can easily be incorporated in the section between the supply line and the handpiece for having the benefits being previously discussed.

In general each kind of pressure regulation device is conceivable. In the following a preferred embodiment of such a pressure regulation device is discussed:
According to the present invention it is provided that a pressure regulation device is provided, comprising:
   - a basic body and
   - a valve element, which can be moved relative to the basic body between an open position and a closed position, wherein the valve element separates an inlet section of the pressure regulation device from an outlet section of the pressure regulation device, when the valve element is in the closed position, and wherein a fluid can be transferred from the inlet section to the outlet section, when the valve element is in the open position,
wherein especially the pressure regulation device, in particular its sections interacting with the fluid in the inlet section, is configured such that, when the valve element is in the closed position, the fluid in the inlet section generates forces, which act on the valve element and wherein the forces in the outlet section, acting on the valve element, compensate each other. The inlet section forms the inlet and the outlet section forms the outlet of the pressure regulation device.

It turned out that by such a pressure regulation device it is advantageously possible to avoid a second valve mechanism for eliminating the transmission of the pressure variations of the fluid of the inlet section to the fluid of the outlet section. This elimination is realized by configuring the pressure regulation device, in particular, by choosing a corresponding geometry of the valve element and the basic body in a transfer region, which includes a regulation opening, which is passed by the fluid, when the valve element is in the open position. Especially, the geometry of the valve element and/or basic body is adapted such that the interaction between the fluid and the valve element and/or basic body creates forces compensating each other. Preferably, this geometry of the valve element and/or the basic body is adapted in the transfer region, in particular regarding the areas of the valve element, being affected by the inlet pressure. Since the transfer region experiences typically forces of the pressure of the inlet section, which could create an unintentional movement of the valve element, the present invention creates a pressure regulation device, its valve element being not affected by pressure variations in the inlet section of the pressure regulation device. Preferably, it is provided that the shape of the valve element and/or the basic body are configured such that the forces, which are generated in the inlet section, compensate each other and as a result, there is no additional force that acts on the spring element. Without such an adjustment or configuration, the variations of the inlet pressures would act on the biased spring element and probably move it to an undesired position, causing a transmission of the pressure variation from the inlet section to the outlet section. Consequently, it is possible to guarantee an outlet pressure being independent on variations of the pressure of the fluid inside the inlet section by using the pressure regulation device, being discussed here. Preferably, the side wall and/or the front end of the valve element is configured, which are affected by the fluid and its pressure in the inlet section.

Advantageously, pressure level at the outlet section/outlet of the pressure regulation device is less sensitive with respect to small variations of the pressure level at the inlet section/inlet. This is of advantage concerning the integration into the system having the powder has jet device. Furthermore, only a single moving valve element, i.e. plunger element, is used, which allows a compact design while preserving low pressure drops. Due to the comparably big flow sections through radial inlet opening and outlet opening and an annular seat geometry, the compactness is further improved. Since number of sealing areas can be reduced by using a pressure regulation device as being discussed above it is possible to minimize the probability of a leak and for reducing friction. This also reduces a hysteresis-effect of the pressure regulation device, being established otherwise after a certain number of operation cycles.

Preferably, it is provided that the pressure regulation device is free of a membrane and/or the pressure of the fluid in the outlet section directly acts on the valve element. Especially, the valve element is made from plastic and/or metal. It is even conceivable that the valve element is made from an elastic material and includes, for example, a first sealing element and/or a third sealing element for sealing the fluid stream from the outside. The valve element is for example shaped in a plunger like manner and/or is arranged in the pressure regulation device such that it can be transferred between its open position and closed position by a translation movement along a translation direction. The fluid can be a liquid or a gas.

Preferably, it is provided that the valve element has a head section and a shaft section, the head section being arranged inside a receiving region of a seat element of the basic body. In particular, the valve element is in contact with the seat element of the basic body by an outside of its head section and an inner side of the valve element is in contact with the outside of the core element of the basic body. As a result, these two contacts restrict the freedom of movement to a translation along the translation direction, being preferably parallel to a longitudinal of the extension of the core element. Preferably, it is provided that the core element extends from the inlet section to the outlet section. In particular, the inlet section of the core element is fixed or incorporated into the seat element of the basic body. For example, the seat element has a hole, the core element passing through the seat element in the assembled state, in particular by passing through the hole. Furthermore, it is provided that the core element passes through the valve element.

Preferably, it is provided that the valve element contacts the basic body in a first sealing region, located in the inlet section of the pressure regulation device, and in a second sealing region, the second sealing region being established in the closed position and being intended for sealing the inlet section from the outlet section, wherein the first inner cross section of the valve element in the first sealing region corresponds to the second inner cross section of the valve element in the second sealing region, in particular with respect to size and/or shape.

Especially, the second inner cross section forms an outlet, which is passed by the fluid for exiting the inlet section and entering the outlet section of the pressure regulation device. This outlet is open, when the valve element is in the open position and is closed when the valve element is in the closed position. The fluid then passes a regulation opening at the front side of the valve element, in particular the plunger element. It turned out, that by choosing the same size and/or shape of the first inner cross section and the second inner cross section, it is possible to suppress or even eliminate all additional forces, which would otherwise be generated and would act on the valve element such that the position of the valve element would be shifted to an undefined position. Preferably, a first diameter of the first inner cross section corresponds to a second diameter of the second inner cross section. Preferably, the term "corresponds" means that deviations with respect to size and/or shape are within a limit of 15 %, more preferably within a limit of 10 % and most preferably within a limit of 5 % with respect to the mean value of the first and second inner cross section.

Preferably, a ratio between the difference between a first extension of the first inner cross section and a second extension of the second inner cross section to a mean of the first extension and the second extension has a value being smaller than 0.2, preferably smaller than 0.1 and most preferably smaller than 0.05. Especially, the term "extension" refers to a maximum extension within the first or second inner cross section, if the extensions varies in the cross section. In case of a circular cross section, the first and/or second extension corresponds to the first and/or second diameter of the first and/or second inner cross section.

Preferably, a ratio between the difference between a first area of the first inner cross section and a second area of the second inner cross section to a mean of the first area and the second area has a value being smaller than 0.2, preferably smaller than 0.1 and most preferably smaller than 0.05.

Preferably, it is provided that the basic body, in particular the core element, includes a channel having a first part in the inlet section and a second part in the outlet section. In particular, it is provided that the fluid is guided within this channel, i.e. inside the core element from the inlet channel to the outlet channel. For transferring the fluid from the inlet section to the outlet section, i. e. from the first part to the second part of the channel, the fluid exits the core element at an opening, being incorporated into the core element, and bypasses the outside of the core element for entering the core element at a further opening of the core element, when the valve element is in the open position.

Preferably, the first part and the second part are arranged coaxially to each other. This simplifies the integration of the pressure regulation device into various fluidic systems as inline component. In particular, it is no longer necessary that some certain redirection of the fluid is necessary for incorporating the pressure regulation device, since the fluid direction is continued by using the pressure regulation device.

Preferably, it is provided that the valve element surrounds, at least partially, the basic body, in particular the core element of the basic body, and a cavity is formed between an inner side of the valve element and the basic body, the fluid passing the cavity in the open position of the valve element for being transported from the inlet section to the outlet section. In particular, the cavity is passed by the fluid, when the valve element is in the open position.

Preferably, it is provided that the basic body has an opening being in fluid connection with the cavity. Especially, the cavity surrounds the core element in the region next to the second sealing element and/or the opening, via which the fluid exits the first part of the channel and enters the cavity. In particular, it is provided that any fluid streams from the first part of the channel to the second part of the channel, thereby passing the opening and/or cavity.

Preferably, the cavity is formed between the first sealing region and the second sealing region, when the valve element is in the closed position. As a result, a symmetric arrangement between the first sealing section and the second sealing section can be established. Especially, the cavity defines the forces of the fluid acting on the valve element. Thus, it is possible to create forces that are directed along the translation direction and opposite to the translation direction. Consequently, the forces compensate each other.

In particular, the pressure regulation device comprises a spring element for biasing the valve element with respect to the basic body, wherein preferably a restoring force of the spring element can be adapted. For adapting the restoring force, it is preferably provided that a nut element or a setting screw can be shifted relative to the basic body for adapting the restoring force being established by the spring element. As a consequence, it is possible to adapt the pressure established by the fluid in the outlet section

Preferably, it is provided that the basic body has a first sealing element for forming the first sealing region and/or a second sealing element for forming the second sealing region. For example, the first and/or second sealing element is an O-ring or a ring-shaped body having a protruding lip element, which causes the sealing.

Particularly, the basic body has a core element and a seat element, the seat element including a receiving region for receiving the valve element, in particular for receiving a head section of the valve element. Especially, the core element and the seat element are separate parts. Using separate parts for the core element and the seat element simplifies the assembling of the cross section and the seat element.

Preferably, it is provided that the first part of the channel and the second part of the channel have the same extension in the direction perpendicular to the stream direction of the fluid, in particular measured in a direction being perpendicular to the translation direction of the valve element, when the fluid is transferred from the inlet section to the outlet section.

Preferably, the valve element is a single moving component in the pressure regulation device. In other words, there is no other moving component in the pressure regulation device and it is still possible to avoid any transfer of pressure variations of the fluid in the inlet section to the pressure at the outlet section.

In particular, the basic body is formed by a core element and the valve element surrounds the core element in both the inlet section and the outlet section, a further cavity being formed between the valve element and the core element in the outlet section. Especially the fourth sealing element is located between the valve element and the core element. The further cavity preferably surrounds the further opening for transferring the fluid into the second part of the channel. As a consequence, a seat element is no longer necessary and the pressure regulation device can be preferably realized by using the shaft like core element being surrounded by the valve element.

Preferably, the head section includes a sealing body protruding inwardly for forming a sealed contact with the second sealing element in the closed position. For surrounding the core element in the outlet section the valve elements has a side wall protruding from the sealing body along a direction being parallel to the translation direction. The length of the side wall measured in the direction parallel to the translation direction is equal or greater than a length of the head section without the protruding side wall. In other words, the side wall extends far enough for guarantying the formation of the further cavity in the closed and open position of the valve element. Especially, the first sealing element, the second sealing element and the fourth sealing element are arranged between the valve element, in particular its inner side, and the core element, in particular its outer side. The cavity and the further cavity are included in the region having those first sealing element, second sealing element and fourth sealing element. Preferably, only three sealing elements are necessary for the pressure regulation device being formed by the valve element and the core element. The cavity is preferably assigned to the inlet section and the further cavity is assigned to the outlet section. In particular, the cavity and the further cavity, both surrounding the core element, are only formed by the valve element and the core element (besides the first sealing element, the second sealing element and the fourth sealing element). In other words: There is no further component necessary such as a seat element.

According to preferred embodiment it is provided that pressure regulation device comprises a membrane or a sliding seal, being mechanically connected to a moveable valve element. In other words: it is also conceivable that the pressure regulation device has a configuration being different from the one being free of membrane.
All benefits and specification being discussed in context of the systems applies analogously for the powder jet device and vice versa.

Wherever not already described explicitly, individual embodiments or their individual aspects and features can be combined or exchanged with one another.

In the drawings is:
- **Fig. 1**: shows a system including a powder gas jet device according to a first preferred embodiment according to the present invention
- **Fig. 2**: shows a system including a powder gas jet device according to a second preferred embodiment according to the present invention
- **Fig. 3**: shows the effect of a pressure regulation device compared to a flow regulation device
- **Fig. 4**: shows a first exemplary version of a pressure regulation device used in a system according to the present invention in an open state,
- **Fig. 5**: shows the first exemplary version of a pressure regulation device used in the system jet device according to the present invention in an closed state,
- **Fig. 6**: shows a detail view of figure 5
- **Fig.7**: shows a cross sectional view of a second exemplary version of a pressure regulation device used in the system jet device according to the present invention, when the valve element is in the closed position
- **Fig. 8**: shows a cross sectional view of a third exemplary version of a pressure regulation device used in a powder gas jet device according to the present invention, when the valve element is in a closed position and
- **Fig. 9**: shows a cross sectional view of a fourth exemplary version of a pressure regulation device used in the system according to the present invention, when the valve element is in a closed position.

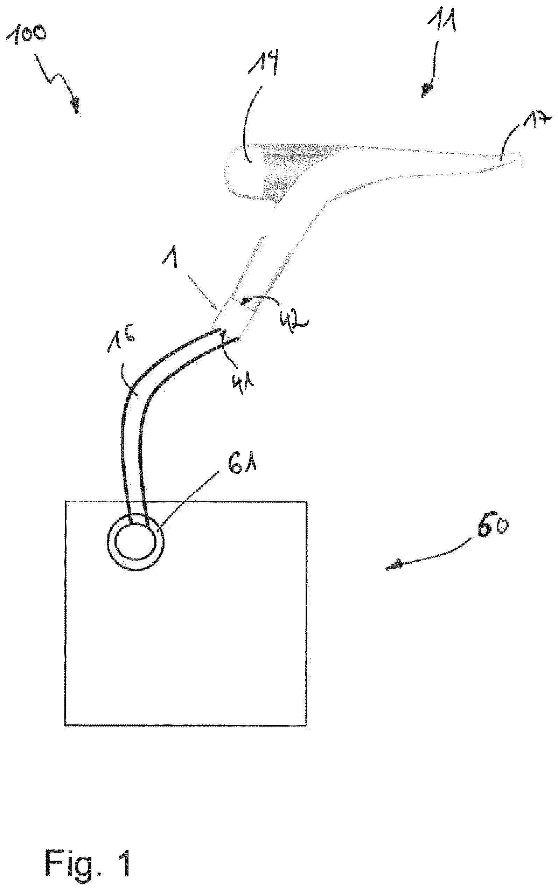

In **figure 1** a system 100 including a powder gas jet device according to a preferred embodiment of the present invention is presented. Those powder gas jet devices are preferably used for removing stains, tartar or a coloration from a tooth and/or for removing dental biofilms, in particular by an air polishing method by using abrasive particles. The powder gas jet device provides an output stream that is able to remove stains and coloration and/or to remove dental biofilms. In operation, the output stream is ejected by a nozzle element 17 at its front end.

In the embodiment of figure 1, the powder gas jet device comprises a handpiece 11 having a nozzle element 17. Especially, the handpiece 11 includes a mixing chamber 14, i. e. a powder-gas-mixing chamber 14, being incorporated into the handpiece 11. Such handpieces 11, being used for air polishing teeth by abrasive particles, are also well known as "handy". Such handpieces 11 are preferably connected via a supply line 16 with a gas pressure source 60. The supply line 16 might be a hose or a tube, which provides or guides pressurized gas to the handpiece 11, in particular to the mixing chamber 14 of the handpiece 11. The mixing chamber 14 is provided and configured to realize the powder gas mixture, being ejected by the nozzle element 17, wherein the pressurized air of the gas pressure source 60 is used to swirl the powder and the gas to form the powder gas mixture inside the mixing chamber 14.

Especially, the handpiece 11 being illustrated in figure 1 is reversibly connected to the gas pressure source 60 at a terminal 61 of the gas pressure source 60. In particular, it is provided that an assembly comprising the handpiece 11 and the supply line 16 can be removably attached to the terminal 61, such that the gas pressure source 60 can also be used for other, especially, different dental treatment systems and/or devices. In particular, the gas pressure source 60 is incorporated into a supply system to provide pressurized gas to different kinds of dental treatment systems and/or devices. Such a gas source or gas pressure source 60 might have a compressor and/or turbine to provide a gas at a determined level, in particular at a level being larger than the level required for operating the powder gas jet device. It might even be possible that the gas pressure source 60 comprises a regulation device for setting and determining the pressure level at the output or outlet of the gas pressure source 60, in particular at the terminal 61. In the prior art, it was usually necessary that the operator adjusts the pressure level at the gas pressure source 60, when they attach the handpiece 11, being intended for air polishing. This is especially necessary, since the gas pressure sources 60, being typically used provide gas at a pressure level being significantly higher than the pressure level being needed in case of operating a powder gas jet device .

As a result, the operator was forced in the prior art to perform this complicated adaption, creating effort and a loss of time. Contrary to this, it is provided that a pressure regulation device 1 is included into the handpiece 11, the pressure regulation device 1 having an inlet 41 and an outlet 42. The pressure regulation device 1 is especially configured to create a fixed and determined pressure level at its outlet 42, independent of the size of the pressure level at its input 41. The functionality of setting the pressure level to a determined and/or desired pressure level at the outlet/output 42 especially applies when the pressure level at the input 41 of the regulation device 1 exceeds a threshold.

In case of attaching the handpiece 11 to the general gas pressure source 60, the desired output level of the pressurized gas will be automatically set due to the pressure regulation device 1, independent of the gas being provided by the gas pressure source 60. In other words: The operator can just plug in the handpiece 11, in particular by using the supply line 16, to the terminal 61 without spending time on adapting the pressure level by adjusting the pressure level at the gas pressure source 60. This significantly simplifies the exchange and the attachment of the handpiece 11 being used for air polishing. For example, the gas pressure source 60 is incorporated into a chair system, being also used for carrying dental instruments and preferably additionally including supply lines for providing electrical energy and/or materials, such as gas and/or water.

In the embodiment being shown in figure 1, the powder gas jet device comprises a pressure regulation device 1, being formed as an adapter, being arranged, preferably interchangeably, between the handpiece 11 and the supply line 16. For example, it is conceivable that the pressure regulation device 1 has interfaces, being adapted to the interface between the supply line 16 and the handpiece 11, such that the pressure regulation device 1, being formed as adapter, can just be added to the system 100 by plugging it into the system 100, between the handpiece 11 and the supply line 16. Thus, it might even be possible to upgrade powder gas jet devices of the prior art by incorporating pressure regulation devices 1 into them.

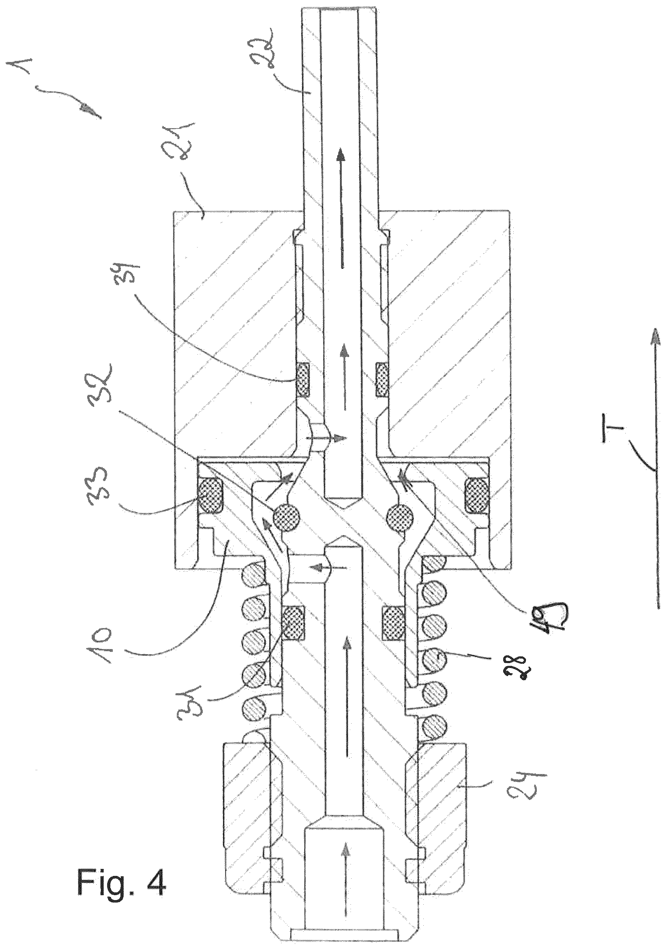

Furthermore, it is conceivable that the pressure regulation device 1, especially the adapter, comprises an adjustment element, being configured to set the pressure level at the output 42 of the pressure regulation device 1. Thus, it is possible to provide a means for a fine adjustment of the output level of the pressurized gas at the outlet 42 of the pressure regulation device 1. For example, it might be reasonable to change by the adjustment element a biasing force of a biasing member, being part of the pressure regulation device 1. This will be explained in more detail in context of the figures 4 to 9. The adjustment element might be realized as a ring being rotated for performing the fine adjustment.

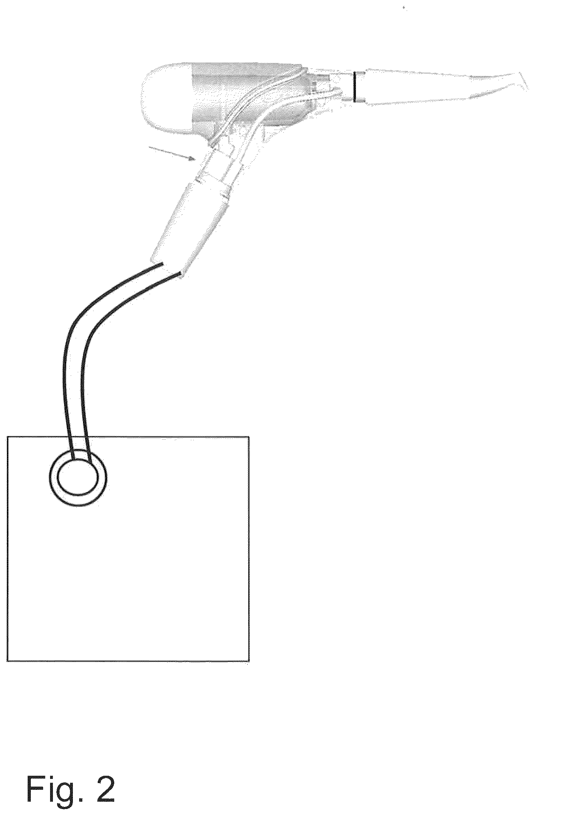

The embodiment illustrated in **figure 2** mainly corresponds to the embodiment of figure 1. The main difference between figure 1 and figure 2 is that the pressure regulation device 1 is incorporated into a grip section of the handpiece 11, in upstream to the mixing chamber 14. Such an incorporation makes a specific compact design necessary and it turned out that especially the pressure regulation device 1, being discussed in detail in the embodiment of the figures 4 to 9, is such compact that it can be incorporated into the handpiece 11 without enlarging the dimensions of the handpiece 11.

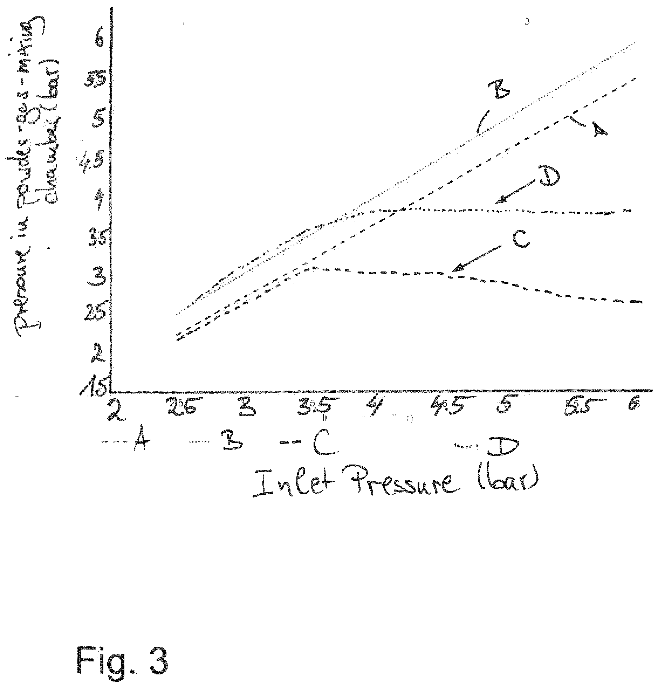

In **figure 3****,** a graphic is illustrated, showing the dependency of the pressure inside the mixing chamber 14 in dependency of the pressure at the inlet 41 of the pressure regulation device 1, i.e. the pressure level existing at the terminal 61 of the gas pressure source 60. Especially, the graphic compares the case of a powder gas jet device, having a pressure regulation device 1 (see lines having references C and D) on the one hand and of a powder gas jet device, having a flow regulation device on the other hand (see lines having references A and B). Such flow regulation devices are also known for regulating the output stream, being ejected from the nozzle element 17 of the powder gas jet device. Although these devices can regulate the flow rate of the ejected powder gas mixture, they are unable to limit the pressure level at the outlet. The greater the pressure at the inlet of the flow regulation device is, the greater the pressure in the mixing chamber 14. In contrast to that, the pressure regulation device 1 is for example configured to create a constant pressure level at its outlet 42, when the pressure level at the inlet 41 exceeds a value, being for example larger than 2.5 bar, preferably larger than 3.5 bar and more preferably larger than 4 bar. In this case, the pressure level at the outlet 42 mainly maintains constant independent of the size of the pressure level at the inlet side 41 of the pressure regulation device 1. The graphic shows both the static (B, D) and the dynamic (C, A) pressure behaviors of the two systems, i. e. the pressure regulation device 1 on the one hand and the flow regulation device on the other hand.

As a consequence of using a pressure regulation device 1, it is advantageously possible to control the powder flow rate and therefore the treatment efficiency in a more precise way, compared to the approaches being known in the prior art, for example, by using a flow rate device. Furthermore, a risk of emphysema, especially in case of a subgingival treatment, is decreased compared to the approaches of the prior art without having a pressure regulation device 1.

As already mentioned, the pressure regulation devices 1 of the figures 4 to 9 are of benefit, especially since the pressure level at the outlet section/outlet 42 of the pressure regulation device 1 is less sensitive with respect to small variations of the pressure level at the inlet section/inlet 41. Furthermore, only a single moving valve element 10, i.e. plunger element, is used, which allows a compact design while preserving low pressure drops. Due to the comparably big flow sections through a radial opening 46 and a further opening 48 and annular seat geometry, the compactness is further improved. Furthermore, the number of sealing areas can be reduced by using a pressure regulation device as being discussed in the figure 4 to 9 for minimizing the probability of a leak and for reducing friction. This also reduces a hysteresis-effect, being established otherwise after a certain number of operation cycles.

In addition, the pressure regulation device 1 is easy to manufacture and has a self-centering mechanism, since the plunger is only guided on a central shaft or core element, which avoids the need of precise adjustments and a setting between parts.

**Figure 4** shows a cross sectional view of a pressure regulation device 1 according to a first preferred embodiment of the present invention, in particular, when a valve element 10 is in an open position. A pressure regulation device 1 is preferably a valve, which controls the pressure of a fluid to a desired value. Such a pressure regulation device 1 is typically included in a pipeline system and/or at an outlet of a fluid source. The fluid might be a liquid or a gas. The pressure regulation device 1, being discussed here, is preferably a part of a dental treatment apparatus, such as a powder jet device or a scaler device. Preferably, the pressure regulation device 1 is a pressure-reducing regulation device and/or is free of a membrane, which is used in pressure regulation devices 1 of the prior art. Essential parts of the pressure regulation device 1 is a basic body 21, 22 and a valve element 10, wherein the valve element 10 can be moved or shifted between an open position and a closed position. In the embodiment illustrated in figure 4, the basic body 21, 22 is formed by two components, i. e. a core element 22 and a seat element 21. In the illustrated embodiment the core element 22 and the seat element 22 are fixed to each other permanently by a positive, material and/or frictional fitting. It is also conceivable that core element 22 and seat element 21 are formed by a single integral component.

The valve element 10 can be moved relative to the basic body 21, 22 between the open position and closed position, wherein the valve element 10 separates an inlet section 41 of the pressure regulation device 1 and an outlet section 42 of the pressure regulation device 1, when the valve element 10 is in the closed position and wherein a fluid can be transferred from the inlet section 41 to the outlet section 42, when the valve element 10 is in the open position. Figure **4** illustrates the pressure regulation device 1, when the valve element 10 is in the open position. As a consequence, the fluid streams from the inlet section 41 of the pressure regulation device 1 to the outlet section 42 of the regulation device 1. In such a scenario, the outlet section 42 can use the newly introduced fluid for increasing the pressure until the desired pressure is reached. The pressure generated in the outlet section 42 automatically causes a movement of the valve element 10 from the open position to the closed position, when an outlet pressure, i. e. the pressure as the outlet section 42, overcomes the restoring force of a spring element 28, which biases the valve element 10 relative to the basic body 21, 22. Thereby, the valve element 10 is moved preferably by a translation movement along a direction being parallel to the translation direction T.

Especially, it is provided that the valve element 10 has a shaft section 10' and a head section 10". In the assembled state, the valve element 10 surrounds the core element 22 in the illustrated embodiment of figure 4, the core element 22 particularly being formed as a shaft. As a consequence, it is possible that the valve element 10 can be shifted along the longitudinal direction of the core element 22 of the basic body 21, 22 for being moved between the open position and the closed position along the translation direction T. The core element 22 at least partially forms a track for moving the valve element 10 along the translation direction T. Especially, the shaft region 10" of the valve element 10 is arranged coaxial to the longitudinal direction of the core element 22 or the outer wall side of the core element 22 in the inlet section 41. Especially, the valve element 10 is guided by the shaft section 10" of the valve element 10 and the outside of the core element 22, in particular in the inlet section 41 of the pressure regulation device 1.

Furthermore, the valve element 10 includes a head section 10', the head section 10' having an increased inner diameter compared to the inner diameter of the shaft section 10" of the valve element 10. The valve element 10 has preferably a plunger like shape. Especially, it is provided that in the head section 10' of the valve element 10 the inner side of the valve element 10 forms a cavity 43, which is passed by the fluid, when the valve element 10 is in the open position, as illustrated in figure **4****.** Especially, it is provided that the cavity 43 is formed by the inner side of the valve element 10 and an outer sider of the core element 22 of the basic body 21, 22. Especially, the cavity 43 is in fluid communication with a first part 40' of a channel 40, being included into the core element 22 of the basic body 21, 22. Especially, it is provided that the core element 22 has an opening 46, the fluid passing the opening 46 for exiting a first part 40' of the channel 40 and entering the cavity 43. The fluid exits the cavity 43 via a regulation opening 49 at a front end of a valve element 10, when the valve element 10 is in the open position. Especially, it is provided that the core element 22 has a tapered diameter along the longitudinal direction in this region, which is intended to be open or closed for regulating the stream of the fluid. The fluid, which bypasses the outside of the core element 22, re-enters into a second part 40' of the channel 40, being incorporated into the core element 22 of the basic body 21, 22 via a further opening 48, the further opening 48 being part of the outlet section 42 of the pressure regulation device 1.

Preferably, the pressure regulation device 1 is a membrane-free pressure regulation device 1.

For adjusting the movement of the valve element 10, such that the desired pressure is established in the outlet section 42 of the pressure regulation device 1, the spring element 28 is connected to the basic body 21, 22, in particular to the core element 22 of the basic body 21, 22 via a nut element 24. By rotating the nut element 24 or shifting the nut element 24 along the direction being parallel to the longitudinal direction of the core element 22 or being parallel to the translation direction T of the valve element 10 during its transfer between the open position and the closed position, the restoring force for the spring element 28 can be adapted and therefore, the force or pressure, which is needed for shifting the valve element 10 from the closed position to the open position, can be adapted.

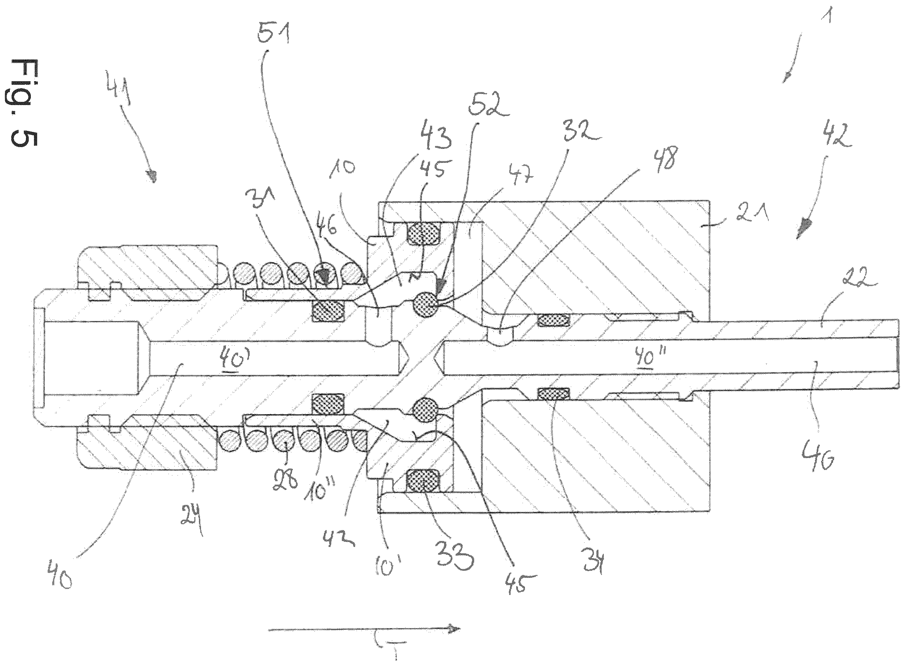

In **figure 5** the pressure regulation device 1 of figure 4 is illustrated, when the valve element 10 is in the closed position. In this closed position, the cavity 43 is filled with the fluid at a pressure of the inlet section 41 of the pressure regulation device 1. Especially, the cavity 43 is formed between a first sealing element 31 and a second sealing element 32, being in the closed position in contact with the valve element 10, in particular an outer rim of the regulation opening 49 at the front side of the valve element 10 for sealing the inlet section 41 from the outlet section 42. As a consequence, a second sealing region 52 is formed, when the valve element 10 is in the closed position. The first sealing region 51 is formed between the shaft section 10' of the valve element 10 and the outside of the core element 22, the outside being arranged next to the inside or inner wall of the shaft section 10' of the valve element 10. Especially, the opening **46** is arranged between the first sealing element 31 and the second sealing element 32 in a direction parallel to the longitudinal direction. By the specific design of the cavity 43, which preferably surrounds the core element 22, in particular completely, it is possible that forces are generated by the pressure inside the inlet section 41, which acts on the valve element 10, in particular on the inner side wall of the head section 10', of the valve element 10 and compensate each other.

Preferably, it is provided that the cavity 43 has an increasing diameter towards the direction to the outlet section 42 of the pressure regulation device 1. This supports a guiding of the fluid stream, when the valve element 10 is in the open position. Preferably, it is provided that the first sealing element 31 and/or the second sealing element 32 is an O-rings and/or sealing component having a lip section.

Furthermore, the head section 10' is arranged inside a receiving region 47 at a front side of the seat element 21 of the basic body 21, 22. In particular, it is provided that the head section 10' of the valve element 10 can be shifted along the translation direction T within the receiving region 47. Especially, it is provided that the receiving region 47 at the outlet section 42 is filled with the fluid, when the valve element 10 is in the closed position.

Furthermore, it is provided that the outer side of the core element 22 has a step-like course in the inlet section 41, the step-like course forming preferably a stop for the translation movement of the valve element 10 in a direction being parallel to the translation direction T.

For sealing the receiving region 47 from the outside, it is provided that the seat element 21 and/or the head section 10' of the valve element 10 has a third sealing element 33. The third sealing element 33 surrounds the head section 10' of the valve element 10 and is preferably incorporated into a corresponding recess, being formed at the outer side wall of the valve element 10 and/or the inner side wall of the seat element 21, in particular in the receiving region 47.

Furthermore, it is provided that a fourth sealing element 34 seals the core element 22 and the seat element 21 for hindering the fluid from exiting the pressure regulation device 1 via the interface section between the core element 22 and the seat element 21 of the basic body 21, 22. Establishing the basic body 21, 22 by fixing the core element 22 and the seat element 21 to each other, preferably permanently, simplifies the assembling process of the pressure regulation device 1, since this allows pulling the valve element 10 over the core element 22, in particular at the front side of the core element 22 being in the finished state or assembled state the outlet section. After pulling the valve element 10 on the core element 22, it is possible to shift the valve element 10 to its desired position. Subsequently, the seat element 21 can be pulled over the same section or front side of the core element 22 and can be connected to the core element 22, preferably permanently.

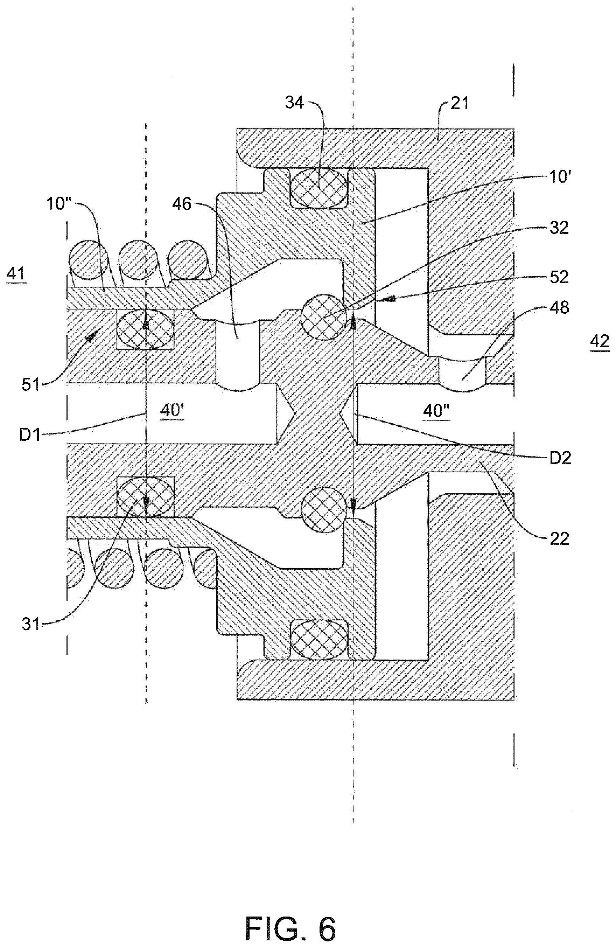

In **figure 6****,** a detailed view of figure 2 is illustrated. The detailed view shows the section including the cavity 43, the first sealing element 31 and the second sealing element 32, when the valve element 10 is in the closed position. Especially, it turned out, that it is possible to reduce or eliminate the forces, being caused by inlet pressure variations and acting on the valve element 10, when a first sealing region 51 has a first inner cross section and a second sealing region 52 has a second inner cross section, the first inner cross section and the second inner cross section corresponding to each other with respect to their size and/or shape.

Preferably, it is provided that a first diameter D1 in the first sealing region 51 corresponds to a second diameter D2 in the second sealing region 52. In the illustrated embodiment, this correspondence is realised by a correspondence of the diameters and/or a specific shape of the inner wall of the valve element 10 in the region of the shaft section 10' on the one hand and the cross section and/or diameter of the regulation opening 49 at the front side of the valve element 10. However, this applies also for cross sections being different from a circular cross section. In this case a first extension and a second extension correspond to each other, the first extension and the second extension being each the maximum extension of the respective cross sections. Preferably, the first sealing region 51 and the second sealing region 52 have cross section geometries, which correspond to each other. For example, both cross sections are circular, elliptic and/or rectangular, in particular having the same dimensions, i. e. areas. It is also conceivable that in case of an asymmetric cross section the cross sections are orientated differently such that they are not flush to each other in a direction being parallel to the translation direction T.

Preferably, it is provided that the first sealing element 31 and/or the second sealing element 32 are part of the core element 22. In particular, the outer side of the core element 22 has recesses and/or profiled sections, which are intended to receive the first sealing element 31 and/or second sealing element 32.

Furthermore, it is provided that the core element 22 passes through the receiving region 47, the seat element 21 and the valve element 10. In particular, it is provided that the core element 22 includes the channel 40, for transporting the fluid from the inlet section 41 to the outlet section 42 of the pressure regulation device 1.

Preferably, it is provided that the core element 11 has an outer diameter in the outlet section 42, being smaller than the outer diameter of the core element 21 in the inlet section 41.

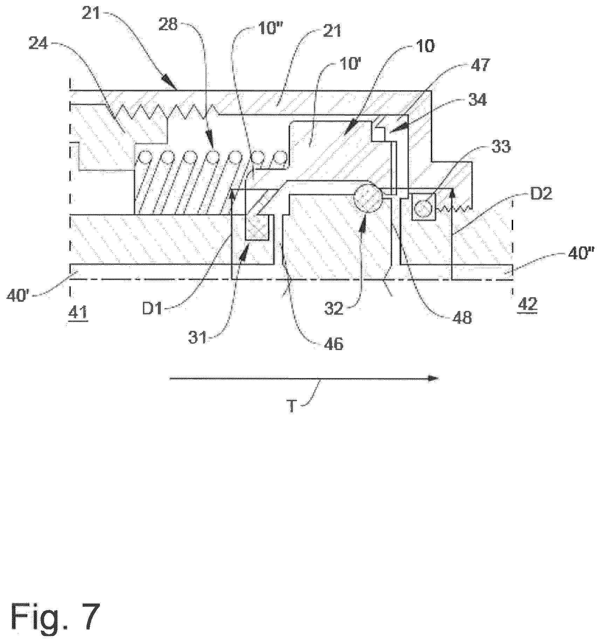

In **figure 7****,** a pressure regulation device 1 according to a second preferred embodiment of the presented invention, is illustrated, when the valve element 10 is in the closed position. In general, the embodiment of figure 4 mainly corresponds to the embodiment of figures 1, 2 and 3. However, the embodiment of figure 4, the nut element 24 is not directly connected to the core element 22 of the basic body 21, 22, but instead to an inner side of a front section of a seat element 21 of the basic body 21, 22. In other words, the nut element 24, being formed in the illustrated embodiment as a setting screw, is placed at an end section of the receiving region 47 of the seat element 21. As a consequence, it is possible to cover the spring element 28 and protect it from environmental influences. Furthermore, the first sealing element 41 is configured by a ring-shaped element having a sealing lip protruding from the ring-shaped element.

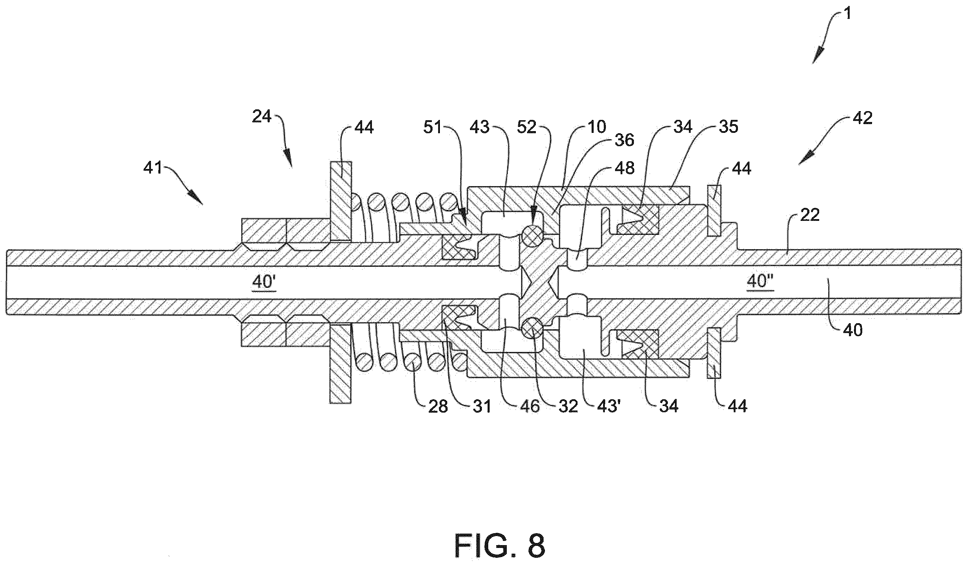

In **figure 8****,** a pressure regulation device 1 according to a third preferred embodiment is shown. The pressure regulation device 1 of figure 5 only distinguishes from the embodiments of the figures 1 to 4 by avoiding a seat element 21, being part of the basic body 21, 22. Instead, the pressure regulation device 1 is formed by the valve element 10 and the core element 22, being a shaft-like body, which extends mainly along the translation direction T. For avoiding the need of a seat element 21, being included in the embodiments of figure 1 to 4, the valve element 10, in particular its head section 10', surrounds the core element 22 both in the inlet section 41 and the outlet section 42 of the pressure regulation device 1. In contrast to that, the valve element 10 in the figures 1 to 4 are mainly part and assigned to the inlet section 41 of the pressure regulation device 1. For establishing the second sealing section 52, the head section 10' of the valve element 10 includes a sealing body 36, protruding inwardly from the inside of the head section 10'. In the closed position, the sealing body 36 contacts the second sealing element 32 for separating the inlet section 41 from the outlet section 42. For surrounding the core element 22 also in the outlet section 42, the valve element 10 includes a side wall 35, which extends from the sealing body 36 along a direction being parallel to the translation direction T. Preferably, the length of the side wall 35 protruding from the sealing body 36, is greater or larger than the length of the head section 10' without the protruding side wall 35. As a consequence, it is possible that the protruding side wall 35 extends far enough for forming a further cavity 43' between the valve element 10 and the core element 22, the further cavity 43' being assigned to the outlet section 42. In particular, it is provided that in the open position, fluid can be transferred from the cavity 43 to the further cavity 43' and subsequently, via the further opening 48, into the second part 40" being incorporated into the channel 40.

For sealing the further cavity 43, the fourth sealing element 34 is arranged between the head section 10' of the valve element 10 and the core element 22. Preferably, the outer side of the core element 22 includes a recess for arranging the fourth sealing element 34 inside this recess. This fourth sealing element 34 having a lip section in the embodiment of figure 5, contacts for sealing the inner side of the valve element 10, in particular its protruding side wall 35. Preferably, the side wall 35 forms a hollow section, in particular a cylindric section for receiving the core element 22.

Furthermore, the embodiment of figure 5 includes fixation means 44 for abutting or supporting the spring element 28. Especially, the fixation means 44 of the inlet section is part of the screwing nut or screwing mechanism for adjusting or adapting the restoring force of the spring element 28, being used in the pressure regulation device 1.

Furthermore, the fixation element 44, being arranged inside the outlet section 42 can be used as a stopper for the valve element 10, which can be shifted along the translation direction T for transferring the pressure regulation device 1 between the open and the closed position.

In particular, it is provided, that the valve element 10 surrounds a section, including the first sealing element 31, the second sealing element 32 and the fourth sealing element 34 and in particular the cavity 43 and the further cavity 43'. By using only a core element 22 and a valve element 10 for providing the pressure regulation 1, it is possible to improve the compactness of the pressure regulation device 1, which simplifies its introduction into supply line systems.

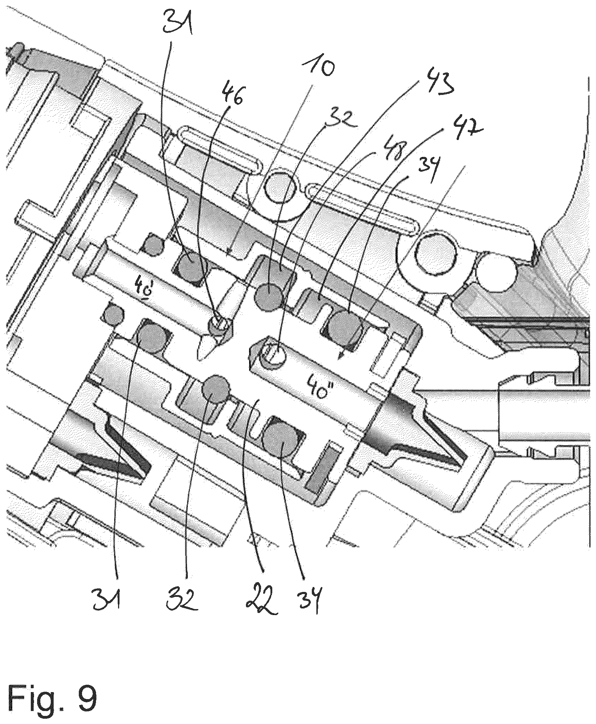

In **figure 9** another embodiment of a pressure regulation device 1 is shown for a powder gas jet device, incorporated into the handpiece, being addressed by the present invention. The pressure regulation device 1 mainly corresponds to the pressure regulation devices 1 being specified and discussed in the previous figures, although it for example includes more side walls radially extending. Furthermore, the biasing member is not included but the skilled person will be aware that such a biasing member is incorporated in such a pressure regulation device 1 for moving the valve element 10.

### Reference signs

- 1: pressure regulation device
- 10: valve element
- 10': head section
- 10": shaft section
- 11: handpiece
- 14: mixing chamber
- 16: supply line
- 17: nozzle element
- 21: seat element
- 22: core element
- 24: nut element
- 28: spring element
- 31: first sealing element
- 32: second sealing element
- 33: third sealing element
- 34: fourth sealing element
- 35: side wall
- 36: sealing body
- 40: channel
- 40': first part
- 40": second part
- 41: inlet section/inlet
- 42: outlet section/outlet
- 43: cavity
- 44: fixation means
- 45: inner side
- 46: opening
- 47: receiving region
- 48: further opening
- 49: regulation opening
- 51: first sealing region
- 52: second sealing region
- 60: gas source
- 61: terminal
- 100: Powder gas jet device
- D1: first diameter
- D2: second diameter

## Claims

1. A system (100) for producing a powder-gas jet for performing a dental treatment, wherein the system (100) is configured for being connected to a dentist chair by a connection, wherein the connection of the system (100) to the dentist chair allows the system (100) to be fed by a pressurized gas flow, the system (100) comprising a compressed gas circuit configured to direct the pressurized gas flow into a powder-gas-mixing chamber (14) to form a gas-powder mixture, wherein the compressed gas circuit comprises at least a pressure regulation device (30) having an inlet (41) and an outlet (42), the regulation device (30) being configured to provide the pressurized gas flow with a pressure at its outlet (42) that is independent of the pressure of the gas flow at its inlet (41), when it is fed by the pressurized gas flow, wherein the pressure regulation device (30) comprises
- a basic body (21, 22) and
- a valve element (10), which can be moved relative to the basic body (21, 22) between an open position and a closed position, wherein the valve element (10) separates an inlet section (41) of the pressure regulation device (1) from an outlet section (42) of the pressure regulation device (1), when the valve element (10) is in the closed position, and wherein a fluid can be transferred from the inlet section (41) to the outlet section (42), when the valve element (10) is in the open position, wherein the system (100) includes a handpiece (11) and the pressure regulation device is incorporated into the handpiece .

2. The system (100) according to claim 1, wherein the pressure regulator (30) is a pressure reducing regulator, the pressure regulator being configured to provide the pressurized gas flow with a pressure at its outlet (42) that is independent of the pressure of the gas flow at its inlet (41), when it is fed by the pressurized gas flow.

3. The system (100) according to one of the preceding claims **characterized in that** the pressure of the gas flow at the outlet (42) of the pressure regulation device (30) is independent from any variation of pressure of the gas flow at the inlet (41).

4. The system (100) according to any one of claim 1 to 3, **characterized in that** the handpiece (11) comprises a nozzle for ejecting the powder-gas mixture, the handpiece (11) being configured for being connected to the dentist chair through a supply line (15) designed for supplying at least a gas flow to the handpiece (11).

5. The system (100) according to claim 4, **characterized in that** the powder chamber (14) is incorporated into the handpiece (11).

6. The system (100) according to any one of claim 1 to 5, **characterized in that** the pressure regulation device (30) is configured to adapt a ratio between the pressure at the inlet (41) and the pressure at the outlet (42).

7. The system (100) according to one of the preceding claims, wherein the pressure regulation device is configured such that, when the valve element (10) is in the closed position, the fluid in the inlet section (41) generates forces, which act on the valve element (10) and wherein the forces in the outlet section (42), acting on the valve element (10), compensate each other.

8. The system (100) according to one of the preceding claims, wherein the valve element (10) contacts the basic body (21, 22) in a first sealing region (51), being located in the inlet section (41) of the pressure regulation device (1), and in a second sealing region (52), the second sealing region (52) being established in the closed position and being intended for sealing the inlet section (41) from the outlet section (42), wherein a first inner cross section of the valve element (10) in the first sealing region (51) corresponds to a second inner cross section of the valve element (10) in the second sealing region (52), in particular with respect to size cross-section surface and/or shape, wherein preferably a ratio between the difference between a first extension of the first inner cross section and a second extension of the second inner cross section to a mean of the first extension and the second extension has a value, being smaller than 0,2, preferably smaller than 0,1 and most preferably smaller than 0,05.

9. The system (100) according to one of the preceding claims, wherein the basic body (21, 22), in particular a core element (22) of the basic body (21, 22), includes a channel (40) having a first part (40') in the inlet section (41) and a second part (40") in the outlet section (42).

10. The system (100) according to one of the preceding claims, wherein the valve element (10) surrounds at least partially the basic body (20, 21) and a cavity (40) is formed between an inner side (45) of the valve element (10) and the basic body (21, 22), the fluid passing the cavity (43) in the open position of the valve element (10) for being transported from the inlet section (41) to the outlet section (42), wherein the basic body (20, 21) has preferably an opening (46), being in fluid connection with the cavity (43), wherein preferably the cavity (43) is formed between the first sealing region (51) and the second sealing region (51), when the valve element (10) is in the closed position.

11. The system (100) according to one of the preceding claims, wherein the basic body (21,22) is formed by a core element (22) and wherein the valve element (10) surrounds the core element (22) in both the inlet section (41) and the outlet section (42), a further cavity (43') being formed between the valve element (10) and the core element (22) in the outlet section (42).

12. The system (100) according to one of the preceding claims, wherein the pressure regulation device (30) comprises a membrane or a sliding seal, being mechanically connected to a moveable valve element.

## Patentansprüche

1. System (100) zur Erzeugung eines Pulver-Gas-Strahls zur Ausführung einer zahnmedizinischen Behandlung, wobei das System (100) so ausgebildet ist, dass es über eine Verbindung an einen Zahnarztstuhl verbunden werden kann, wobei die Verbindung des Systems (100) mit dem Zahnarztstuhl es ermöglicht, das System (100) mit einem Druckgasstrom zu versorgen, wobei das System (100) einen Druckgaskreislauf umfasst, der so ausgebildet ist, dass er den Druckgasstrom in eine Pulver-Gas-Mischkammer (14) ausrichtet, um ein Gas-Pulver-Gemisch zu bilden, wobei der Druckgaskreislauf zumindest eine Druckregelvorrichtung (30) mit einem Einlass (41) und einem Auslass (42) aufweist, wobei die Regelvorrichtung (30) so ausgebildet ist, dass sie dem Druckgasstrom an ihrem Auslass (42) einen Druck bereitstellt, der unabhängig vom Druck des Gasstroms an ihrem Einlass (41) ist, wenn sie mit dem Druckgasstrom gespeist wird, wobei die Druckregelvorrichtung (30) umfasst
- einen Grundkörper (21, 22) und
- ein Ventilelement (10), das relativ zum Grundkörper (21, 22) zwischen einer offenen Position und einer geschlossenen Position bewegbar ist, wobei das Ventilelement (10) einen Einlassabschnitt (41) der Druckregelvorrichtung (1) von einem Auslassabschnitt (42) der Druckregelvorrichtung (1) trennt, wenn sich das Ventilelement (10) in der geschlossenen Position befindet, und wobei ein Fluid vom Einlassabschnitt (41) zum Auslassabschnitt (42) überführt werden kann, wenn sich das Ventilelement (10) in der offenen Position befindet, wobei das System (100) ein Handstück (11) umfasst und die Druckregelvorrichtung in das Handstück integriert ist.

2. System (100) gemäß Anspruch 1, wobei der Druckregler (30) ein Druckminderer ist, der so ausgebildet ist, dass er den Druckgasstrom an seinem Auslass (42) mit einem Druck versorgt, der unabhängig vom Druck des Gasstroms an seinem Einlass (41) ist, wenn er von dem Druckgasstrom gespeist wird.

3. System (100) gemäß einem der vorhergehenden Ansprüche, **dadurch gekennzeichnet, dass** der Druck des Gasstroms am Auslass (42) der Druckregelvorrichtung (30) unabhängig von jeglicher Druckschwankung des Gasstroms am Einlass (41) ist.

4. System (100) gemäß einem der Ansprüche 1 bis 3, **dadurch gekennzeichnet, dass** das Handstück (11) eine Düse zum Ausstoßen des Pulver-Gas-Gemischs umfasst, wobei das Handstück (11) so ausgebildet ist, dass es über eine Versorgungsleitung (15), die zumindest einen Gasstrom zum Handstück (11) liefert, mit dem Zahnarztstuhl verbunden werden kann.

5. System (100) gemäß Anspruch 4, **dadurch gekennzeichnet, dass** die Pulverkammer (14) in das Handstück (11) integriert ist.

6. System (100) gemäß einem der Ansprüche 1 bis 5, **dadurch gekennzeichnet, dass** die Druckregelvorrichtung (30) so ausgebildet ist, dass sie ein Verhältnis zwischen dem Druck am Einlass (41) und dem Druck am Auslass (42) anpasst.

7. System (100) gemäß einem der vorhergehenden Ansprüche, wobei die Druckregelvorrichtung so ausgebildet ist, dass, wenn sich das Ventilelement (10) in der geschlossenen Position befindet, das Fluid im Einlassabschnitt (41) Kräfte erzeugt, die auf das Ventilelement (10) wirken, und wobei sich die auf das Ventilelement (10) wirkenden Kräfte im Auslassabschnitt (42) gegenseitig ausgleichen.

8. System (100) gemäß einem der vorhergehenden Ansprüche, wobei das Ventilelement (10) den Grundkörper (21, 22) in einem ersten Dichtungsbereich (51) berührt, der im Einlassabschnitt (41) der Druckregelvorrichtung (1) positioniert ist, sowie in einem zweiten Dichtungsbereich (52), wobei der zweite Dichtungsbereich (52) in der geschlossenen Position entsteht und dazu bestimmt ist, den Einlassabschnitt (41) gegenüber dem Auslassabschnitt (42) abzudichten, wobei ein erster innerer Querschnitt des Ventilelements (10) im ersten Dichtungsbereich (51) einem zweiten inneren Querschnitt des Ventilelements (10) im zweiten Dichtungsbereich (52) entspricht, insbesondere hinsichtlich der Größe, der Querschnittsfläche und/oder der Form, wobei vorzugsweise ein Verhältnis zwischen der Differenz einer ersten Erstreckung des ersten inneren Querschnitts und einer zweiten Erstreckung des zweiten inneren Querschnitts und einem Mittelwert aus der ersten Erstreckung und der zweiten Erstreckung einen Wert annimmt, der kleiner als 0,2, vorzugsweise kleiner als 0,1 und besonders bevorzugt kleiner als 0,05 ist.

9. System (100) gemäß einem der vorhergehenden Ansprüche, wobei der Grundkörper (21, 22), insbesondere ein Kernelement (22) des Grundkörpers (21, 22), einen Kanal (40) umfasst, der einen ersten Abschnitt (40') im Einlassabschnitt (41) und einen zweiten Abschnitt (40") im Auslassabschnitt (42) aufweist.

10. System (100) gemäß einem der vorhergehenden Ansprüche, wobei das Ventilelement (10) den Grundkörper (20, 21) zumindest teilweise umschließt und zwischen einer Innenseite (45) des Ventilelements (10) und dem Grundkörper (21, 22) ein Hohlraum (40) gebildet ist, wobei das Fluid in der geöffneten Stellung des Ventilelements (10) den Hohlraum (43) durchströmt, um vom Einlassabschnitt (41) zum Auslassabschnitt (42) transportiert zu werden, wobei der Grundkörper (20, 21) vorzugsweise eine Öffnung aufweist (46) aufweist, die mit dem Hohlraum (43) in Fluidverbindung steht, wobei der Hohlraum (43) vorzugsweise zwischen dem ersten Dichtungsbereich (51) und dem zweiten Dichtungsbereich (51) ausgebildet ist, wenn sich das Ventilelement (10) in der geschlossenen Position befindet.

11. System (100) gemäß einem der vorhergehenden Ansprüche, wobei der Grundkörper (21, 22) durch ein Kernelement (22) gebildet ist und wobei das Ventilelement (10) das Kernelement (22) sowohl im Einlassabschnitt (41) als auch im Auslassabschnitt (42) umschließt, wobei im Auslassabschnitt (42) zwischen dem Ventilelement (10) und dem Kernelement (22) ein weiterer Hohlraum (43') ausgebildet ist.

12. System (100) gemäß einem der vorhergehenden Ansprüche, wobei die Druckregelvorrichtung (30) eine Membran oder eine Gleitdichtung umfasst, die mechanisch mit einem beweglichen Ventilelement verbunden ist.

## Revendications

1. Système (100) destiné à produire un jet de poudre et de gaz pour effectuer un traitement dentaire, dans lequel
le système (100) est conçu pour être raccordé à un fauteuil de dentiste par l'intermédiaire d'un raccord,
le raccord du système (100) au fauteuil de dentiste permet au système (100) d'être alimenté en un flux de gaz sous pression,
le système (100) comprend un circuit de gaz comprimé conçu pour diriger le flux de gaz sous pression dans une chambre de mélange poudre-gaz (14) afin de former un mélange gaz-poudre,
le circuit de gaz comprimé comprend au moins un dispositif de régulation de pression (30) muni d'une entrée (41) et d'une sortie (42),
le dispositif de régulation (30) est conçu pour fournir le flux de gaz sous pression à une pression au niveau de sa sortie (42) qui est indépendante de la pression du flux de gaz au niveau de son entrée (41), lorsqu'il est alimenté en flux de gaz sous pression,
le dispositif de régulation de pression (30) comprend
- un corps de base (21, 22), et
- un élément de soupape (10) qui peut être déplacé par rapport au corps de base (21, 22) entre une position ouverte et une position fermée, sachant que l'élément de soupape (10) sépare une section d'entrée (41) du dispositif de régulation de pression (1) d'une section de sortie (42) du dispositif de régulation de pression (1), lorsque l'élément de soupape (10) est en position fermée, et un fluide peut être transféré de la section d'entrée (41) vers la section de sortie (42) lorsque l'élément de soupape (10) est en position ouverte,
le système (100) comprend une pièce à main (11), et le dispositif de régulation de pression est intégré dans la pièce à main.

2. Système (100) selon la revendication 1,
dans lequel le régulateur de pression (30) est un régulateur détendeur, ledit régulateur de pression étant conçu pour fournir le flux de gaz sous pression à une pression au niveau de sa sortie (42) qui est indépendante de la pression du flux de gaz au niveau de son entrée (41), lorsqu'il est alimenté en flux de gaz sous pression.

3. Système (100) selon l'une des revendications précédentes,
**caractérisé en ce que** la pression du flux de gaz au niveau de la sortie (42) du dispositif de régulation de pression (30) est indépendante de toute variation de pression du flux de gaz au niveau de l'entrée (41).

4. Système (100) selon l'une des revendications 1 à 3,
**caractérisé en ce que** la pièce à main (11) comprend une buse destinée à éjecter le mélange poudre-gaz, la pièce à main (11) étant conçue pour être raccordée au fauteuil de dentiste par l'intermédiaire d'une conduite d'alimentation (15) destinée à fournir au moins un flux de gaz à la pièce à main (11).

5. Système (100) selon la revendication 4,
**caractérisé en ce que** la chambre à poudre (14) est intégrée dans la pièce à main (11).

6. Système (100) selon l'une des revendications 1 à 5,
**caractérisé en ce que** le dispositif de régulation de pression (30) est conçu pour adapter un rapport entre la pression au niveau de l'entrée (41) et la pression au niveau de la sortie (42).

7. Système (100) selon l'une des revendications précédentes,
dans lequel le dispositif de régulation de pression est conçu de telle sorte que, lorsque l'élément de soupape (10) est en position fermée, le fluide dans la section d'entrée (41) génère des forces qui agissent sur l'élément de soupape (10), et les forces dans la section d'entrée (41), agissant sur l'élément de soupape (10), se compensent mutuellement.

8. Système (100) selon l'une des revendications précédentes,
dans lequel
l'élément de soupape (10) est en contact avec le corps de base (21, 22) dans une première zone d'étanchéité (51), située dans la section d'entrée (41) du dispositif de régulation de pression (1), et dans une deuxième zone d'étanchéité (52),
la deuxième zone d'étanchéité (52) est établie en position fermée et est destinée à étanchéifier la section d'entrée (41) par rapport à la section de sortie (42),
une première section transversale interne de l'élément de soupape (10) dans la première zone d'étanchéité (51) correspond à une deuxième section transversale interne de l'élément de soupape (10) dans la deuxième zone d'étanchéité (52), en particulier en ce qui concerne la taille et/ou la forme en section transversale, de préférence, un rapport de la différence entre une première extension de la première section transversale interne et une deuxième extension de la deuxième section transversale interne sur une moyenne de la première extension et de la deuxième extension a une valeur inférieure à 0,2, de préférence inférieure à 0,1 et de manière particulièrement préférée inférieure à 0,05.

9. Système (100) selon l'une des revendications précédentes,
dans lequel le corps de base (21, 22), en particulier un élément central (22) du corps de base (21, 22), comprend un canal (40) qui présente une première partie (40') dans la section d'entrée (41) et une deuxième partie (40") dans la section de sortie (42).

10. Système (100) selon l'une des revendications précédentes,
dans lequel
l'élément de soupape (10) entoure au moins partiellement le corps de base (20, 21), et une cavité (40) est formée entre une face interne (45) de l'élément de soupape (10) et le corps de base (21, 22),
en position ouverte de l'élément de soupape (10), le fluide passe par la cavité (43) pour être transporté de la section d'entrée (41) vers la section de sortie (42), le corps de base (20, 21) comporte de préférence une ouverture (46) en communication fluidique avec la cavité (43),
de préférence, la cavité (43) est formée entre la première zone d'étanchéité (51) et la deuxième zone d'étanchéité (51) lorsque l'élément de soupape (10) est en position fermée.

11. Système (100) selon l'une des revendications précédentes,
dans lequel
le corps de base (21, 22) est formé par un élément central (22), et
l'élément de soupape (10) entoure l'élément central (22) tant dans la section d'entrée (41) que dans la section de sortie (42), une autre cavité (43') étant formée entre l'élément de soupape (10) et l'élément central (22) dans la section de sortie (42).

12. Système (100) selon l'une des revendications précédentes,
dans lequel le dispositif de régulation de pression (30) comprend une membrane ou un joint coulissant relié(e) mécaniquement à un élément de soupape mobile.
